# EUROPEAN PATENT SPECIFICATION

(11) **EP 3 800 097 B1**
(45) Date of publication and mention of the grant of the patent: **01.06.2022**
(21) Application number: 20199925.7
(22) Date of filing: 02.10.2020
(51) Int. Cl.: B60T 13/14

(54) **METHOD, CIRCUIT, DISTRIBUTOR AND BRAKING PLANT FOR TOWED VEHICLES**
VERFAHREN, SCHALTUNG, VERTEILER UND BREMSANLAGE FÜR GEZOGENE FAHRZEUGE
PROCÉDÉ, CIRCUIT, DISTRIBUTEUR ET INSTALLATION DE FREINAGE POUR VÉHICULES TRACTÉS

(30) Priority: 03.10.2019 IT 201900017825
(43) Date of publication of application: 07.04.2021
(73) Proprietor: Slanzi Oleodinamica S.r.l., 42017 Novellara (IT)
(72) Inventor: ANNONI, Matteo, 42017 NOVELLLARA (RE) (IT); VENTURI, Luca, 42017 NOVELLARA (RE) (IT); IOTTI, Andrea, 42017 NOVELLARA (RE) (IT)
(74) Representative: Cataldi, Giulia

(56) References cited:
- EP-A1- 0 531 077
- WO-A1-2017/050632
- CN-A- 107 264 499
- CN-A- 110 001 611
- FR-A1- 2 479 350

## Description

### TECHNICAL FIELD

The present invention relates to a method, a circuit, a distributor and a braking plant for towed vehicles, i.e. trailers.

### BACKGROUND ART

In particular, the present invention relates to a method, a circuit, a distributor and a braking plant for towed vehicles configured to be operated hydraulically by an agricultural or forestry machine and which complies with EU Regulation 167/2013.

More specifically, EU Regulation 167/2013 regards the rules relating to the braking of vehicles for the purpose of the homologation of both agricultural and forestry vehicles as well as towed vehicles. EU Regulation 167/2013 establishes, among other things, that an agricultural or forestry machine must be provided with a main line crossed by high-pressure oil and a secondary line crossed by low-pressure oil separate from one another, so that one line can ensure the braking of the towed vehicle also in case of malfunctioning of the other line.

According to the recent Regulation, it is also necessary for a towed vehicle, i.e. a trailer, to be provided in turn with a dual-line braking circuit, i.e. having a high-pressure line, generally at about 130 bar, and a low-pressure line, generally at about 30 bar.

Dual-line braking circuits for trailers configured to be operated by agricultural or forestry machines and compliant with EU Regulation 167/2013 are known.

However, the braking circuits of a known type have the drawback of not ensuring a continuous and constant sealing around the actuators which actuate the brakes of the trailer. This can obviously cause serious malfunctions of the system and dangerous situations while driving.

### DISCLOSURE OF INVENTION

The objective of the present invention is to provide a method, a circuit, a distributor and a braking plant which overcome the drawbacks described above.

According to the present invention, a braking method as mentioned in the appended claims is provided.

According to the present invention, a braking circuit as mentioned in the appended claims is provided.

According to the present invention, a hydraulic distributor as mentioned in the appended claims is provided.

According to the present invention, a braking plant as mentioned in the appended claims is provided.

### BRIEF DESCRIPTION OF THE DRAWINGS

The invention will now be described with reference to the attached drawings, which illustrate non-limiting embodiment examples thereof:
- Figure 1 is a schematic view of a plant according to the present invention during an operating configuration;
- Figures 2 to 12 are similar to Figure 1 and show the plant according to the present invention in respective different operating configurations;
- Figure 13 is a schematic view similar to Figure 1 of a variant of a plant according to the present invention;
- Figure 14 is a schematic view similar to Figure 1 of a further variant of a plant according to the present invention; and
- Figure 15 is a perspective and schematic view of a distributor according to the present invention.

### BEST MODE FOR CARRYING OUT THE INVENTION

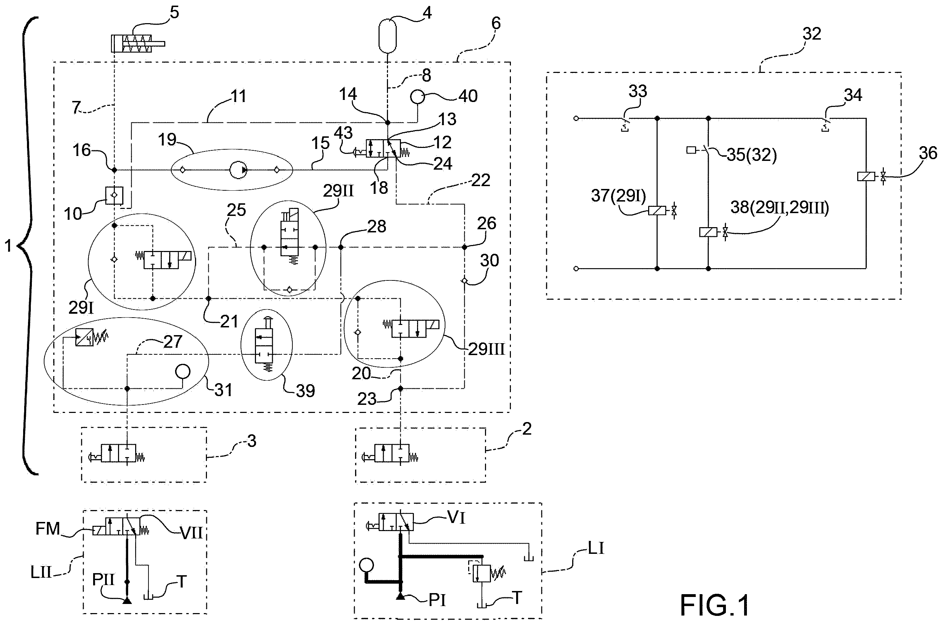

In Figure 1, reference numeral 1 indicates as a whole the diagram of a braking plant according to the present invention. The plant 1 is configured to interact, in use, with a plant (of a known type and not illustrated) of an agricultural or forestry towing machine (of a known type and not illustrated, for example a tractor) having a main line LI crossed by high-pressure oil and a secondary line LII crossed by low-pressure oil.

The figures illustrate the plant of an agricultural or forestry machine only in part, in particular they simply schematise the part of hydraulic interface at the hydraulic connection to a towed vehicle according to the present invention.

The main high-pressure line LI comprises, in a known manner, a high-pressure oil inlet PI and can be selectively connected to a discharge T. The secondary low-pressure line LII comprises a low-pressure inlet PII and can be selectively connected to a discharge T.

In the figures, in particular for the main line LI, a two-position and three-way mechanical valve VI is shown.

The mechanical valve VI is actuated by the service brake of the towing vehicle (usually a pedal) and is configured to: allow the passage of high-pressure oil from the oil inlet PI towards the plant 1; or to interrupt the flow of oil from the towing vehicle to the plant 1 and, simultaneously, connect the plant 1 to the discharge T.

Analogously, in the figures for the secondary line LII, a two-position and three-way mechanical valve VII is shown. The mechanical valve VII is actuated electrically by the handbrake of the towing vehicle and is configured to: allow the passage of oil under pressure from the oil inlet PII towards the plant 1; or to interrupt the flow of oil from the towing vehicle to the plant 1 and, simultaneously, connect the plant 1 to the discharge T.

As illustrated in Figure 1, the plant 1 comprises:
- a high-pressure joint 2, which is configured to be connected, in use, to the main high-pressure line LI of the towing vehicle;
- a low-pressure joint 3, which is configured to be connected, in use, to the secondary low-pressure line LII of a towing vehicle;
- an accumulator 4;
- an actuator 5 configured to operate a braking system (of a known type and not illustrated); and
- a hydraulic circuit 6, hereafter identified also as braking circuit 6, which connects the low-pressure joint 3 and the high-pressure joint 2 to the actuator 5 and the accumulator 4.

The high-pressure joint 2 and the low-pressure joint 3 are joints of a female type and, in use, are coupled to respective male joints present on the towing vehicle.

In the figures, the high-pressure joint 2 and the low-pressure joint 3 are schematised as mechanical valves configured to be closed, when the joints 2 and 3 are not connected to the towing vehicle, and to open for allowing the passage of oil, when the connection with the respective lines LI and LII of the towing vehicle occurs.

According to the illustrated example, the actuator 5 is of a known type. In general, the actuator 5 is configured to operate the braking system (of a known type and not illustrated) so as to: block one or more wheels of a towed vehicle, when it is filled with oil under pressure; and to release, i.e. allow the rotation of the wheels of a trailer, when it is empty, i.e. when it is not filled with oil under pressure.

According to the illustrated example, the actuator 5 is a single-acting cylinder. Without losing generality, the braking actuator 5 can be of a different type from the one illustrated.

The accumulator 4 is configured, in a known manner, to be filled with a certain volume of oil at a predetermined pressure (according to the Regulation about 150 bar). Advantageously, the accumulator 4 is configured, depending on the operating conditions as it will be better illustrated in the following, to exchange high-pressure oil with the actuator 5, so as to: keep the actuator 5 filled with high-pressure oil or to completely empty the actuator 5.

The accumulator 4 can reach pressures equal to or greater than those of the main high-pressure line LI.

More specifically, the braking circuit 6 comprises:
- a brake branch 7 connected, in use, to the actuator 5;
- a transfer branch 8 connected, in use, to the accumulator 4; and
- a set of intermediate branches which connect the brake branch 7 and the transfer branch 8 to the high-pressure joint 2 and the low-pressure joint 3, as it will be better illustrated in the following.

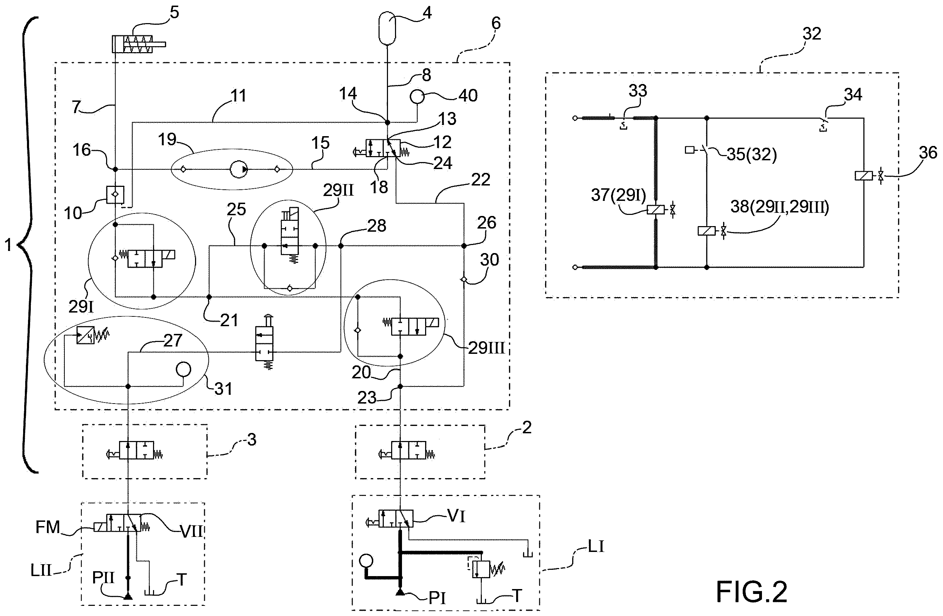

It is noted that, in Figure 1, different dashed lines have been used to distinguish the different branches of the hydraulic circuit 6, this is exclusively for explanatory purposes and is not repeated in the following Figures 2 to 14.

Advantageously, the hydraulic circuit 6 comprises a check valve 10 arranged along the brake branch 7. The check valve 10 is a non-return valve.

Advantageously, the hydraulic circuit 6 comprises a control branch 11, which connects the check valve 10 to the transfer branch 8 so that the oil under pressure inside the transfer branch 8 is able to open the check valve 10 in certain operating configurations, as it will be better illustrated in the following. In other words, the check valve 10 is piloted. According to the illustrated example, the check valve 10 is hydraulically piloted, i.e. it is piloted directly by means of the oil inside the control branch 11.

Without losing generality and according to variants not illustrated, the check valve 10 can be piloted in a different manner, for example electro-hydraulically (with a pressure switch and a solenoid valve) or mechanically, or pneumatically or with equivalent systems.

Advantageously, the hydraulic circuit 6 comprises a directional control valve 12. The transfer branch 8 is interposed between the accumulator 4 and the directional control valve 12.

One end of the transfer branch 8 is configured to be put, in use, in communication with an accumulator 4 and the other end of the transfer branch 8 is connected to an opening 13 of a respective way of the directional control valve 12.

Advantageously, the joining node 14 between the control branch 11 and the transfer branch 8 is interposed between the directional control valve 12 and the accumulator 4.

According to the example illustrated in Figure 1, the directional control valve 12 is a two-position and three-way slide valve.

According to a variant not illustrated, the directional control valve 12 can be of a different type and can comprise, for example, a plurality of two-way slide valves.

Furthermore, the hydraulic circuit 6 comprises an emergency branch 15 which connects the brake branch 7 to the directional control valve 12. According to what illustrated, the joining node 16 between the emergency branch 15 and the brake branch 7 is interposed between the check valve 10 and the actuator 5.

One end of the emergency branch 15 is connected to an opening 18 of a respective way of the directional control valve 12.

Advantageously, the directional control valve 12 is configured to selectively connect said transfer branch 8: to an emergency branch 15, along which a pump is arranged, in particular a hand pump 19, which is configured to transfer oil from the actuator 5 towards the accumulator 4.

Advantageously, the directional control valve 12 always prevents the hand pump 19 from being in communication with the transfer branch-off 22.

Advantageously, the hydraulic circuit 6 further comprises a hand pump 19 along said emergency branch 15. In the figures, the hand pump is schematised by the set of components indicated by the reference numeral 19. As it will be better illustrated in the following, the hand pump 19 serves to empty the actuator 5, so as to be able to move the towed vehicle in case of a breakdown of the dual-line system of the towing vehicle and in the case where the towed vehicle is not connected to a towing vehicle.

The set of intermediate branches comprises, in turn:
- a high-pressure branch 20, which is connected, at one end, to the high-pressure joint 2 and, at the other end, to a joining node 21 joining it to the brake branch 7;
- a transfer branch-off 22, which is connected, at one end, to a branch-off node 23 of the high-pressure branch 20 and, at the other end, to an opening 24 of a respective way of the directional control valve 12;
- an intermediate branch 25, which is connected, at one end, to a joining node 26 joining it to the transfer branch-off 22 and, at the other end, to the joining node 21 joining it to the brake branch 7;
- a low-pressure branch 27, which is connected, at one end, to the low-pressure joint 3 and, at the other end, to a joining node 28 joining it to the intermediate branch 25.

Advantageously, the braking circuit 6 according to the present invention comprises a flow control valve 291 arranged along the brake branch 7 between the check valve 10 and the joining node.

According to the illustrated example, the flow control valve 291 is a solenoid valve. Without losing generality, the flow control valve 291 can be a mechanical or hydraulic valve.

According to the illustrated example, the flow control valve 291 in the rest position is closed, i.e. interrupts the passage of oil along the brake branch 7. In particular, the flow control valve 291 prevents leakages of oil from the actuator 5 towards the main line LI and, potentially, the discharge T. This way, advantageously, a seal in addition to the check valve 10 along the brake branch 7 is obtained.

Advantageously, the braking circuit 6 according to the present invention further comprises a flow control valve 2911 arranged along the intermediate branch 25.

According to the illustrated example, the flow control valve 2911 is a solenoid valve. Without losing generality, the flow control valve 2911 can be a mechanical or hydraulic valve.

According to the illustrated example, the flow control valve 2911 in the rest position is open, i.e. allows the passage of oil along the intermediate branch 25.

Advantageously, the joining node 28 between the low-pressure branch 27 and the intermediate branch 25 is interposed between the flow control valve 2911 and the joining node 26 between the intermediate branch 25 and the transfer branch-off 22.

Advantageously, the braking circuit 6 comprises a flow control valve 29III arranged along the high-pressure branch 20. The flow control valve 29III is interposed between the branch-off node 23 and the joining node 21 joining it to the brake branch 7.

According to the illustrated example, the flow control valve 29III is a solenoid valve. Without losing generality, the flow control valve 29III can be a mechanical or hydraulic valve.

According to the illustrated example, the flow control valve 29III in the rest position is closed, i.e. interrupts the flow of oil along the high-pressure branch 20.

According to the example illustrated in the figures, the flow control valves 291, 2911 and 29III are of the same type. According to a variant not illustrated, the flow control valves 291, 2911 and 29III can be of types different from one another.

The braking circuit 6 further comprises a non-return valve 30 arranged along the transfer branch-off 22. The non-return valve 30 is interposed between the branch-off node 23 and the joining node 26 between the transfer branch-off 22 and the intermediate branch 25. Advantageously, the presence of the non-return valve 30 is also used for modulating the rates at which the actuator 5 and the accumulator 4 are filled when the high-pressure branch 20 is connected to the main high-pressure line LI. In other words, the non-return valve 30 helps regulating the proportionality of the filling rates of the actuator 5 and of the accumulator 4 in compliance with the Regulation. In particular, the presence of the transfer branch-off 22 serves to speed up the filling of the accumulator 4.

The circuit 6 further comprises a pressure switch 31 which is connected to the low-pressure branch 27 and is configured to electrically operate the plant 1, depending on the value of the oil pressure along the low-pressure branch 27.

Advantageously, the hydraulic circuit 6 further comprises a manually operated mechanical valve 39 arranged along the low-pressure branch 27.

Advantageously, the mechanical valve 39 is a mushroom valve and can be actuated directly by an operator, as it will be better illustrated in the following. The mechanical valve 39 is configured to interrupt or allow the passage of oil along the low-pressure branch 27. In the rest position, the mechanical valve 39 closes the oil passage along the low-pressure branch 27.

According to the illustrated example, the flow control valves 291, 2911 and 29III are solenoid-operated. Furthermore, the plant 1 also comprises a dedicated operating logic, represented schematically in the figures by an electric circuit 32, schematised at the side of the hydraulic circuit 6.

The operating logic can be realized electrically, hydraulically, pneumatically or in other known manners; in the present discussion, without losing generality, the electric logic is described, which is considered prevailing for this type of application.

Advantageously, the electric circuit 32 comprises:
- a main starter switch 33 (actuatable with the coupling of the joints 2 and 3 to the respective lines LI and LII of the towing vehicle);
- a secondary switch 34 actuatable by means of the handbrake;
- a status switch 35 actuatable by means of the pressure switch 31;
- a solenoid actuator 36 configured to actuate the valve VII of the main line LI;
- a solenoid actuator 37 configured to actuate the flow control valve 291; and
- a solenoid actuator 38 configured to actuate the flow control valves 2911 and 29III.

Advantageously, the plant 1 further comprises a pressure switch 40 installed along the transfer branch 8 and connected to a respective control light (of a known type and not illustrated) of the towing vehicle. The pressure switch 40 is configured, in a known manner, to switch off said control light in the case where the oil pressure along the transfer branch 8 (and consequently in the accumulator) exceeds a predefined threshold value.

In Figure 1, the plant 1 is illustrated with the electric circuit 32 switched off and in the condition of first equipment, i.e. with the high-pressure joint 2 and the low-pressure joint 3 not yet connected respectively to the main line LI and the secondary line LII.

The operation of the plant 1 in different operating conditions is described hereafter.

Figure 2 illustrates the plant 1 in the condition of both electrical and hydraulic connection to the towing vehicle. According to the operating configuration illustrated in Figure 2:
- the high-pressure joint 2 is connected to the main line LI and the respective slide valve is switched over into the open position, so as to allow the passage of oil potentially arriving from the main line LI;
- the low-pressure joint 3 is connected to the secondary low-pressure line LII and the respective slide valve is switched over into the open position, so as to allow the passage of oil potentially arriving from the secondary line LII.

According to what illustrated in Figure 2, the connection also electrical to the towing vehicle causes the main switch 33 to close and, consequently, the flow control valve 291 to switch over into the open position, so as to be able to allow the passage of oil along the brake branch 7.

It is specified that the operating configuration illustrated in Figure 2 is a condition of absolute first use, wherein the plant 1 has not yet been filled with oil under pressure.

In such step, at the moment of the first coupling with a towing vehicle, it is necessary to carry out a first commissioning operation, so as to load both the accumulator 4 and the actuator 5 with high-pressure oil.

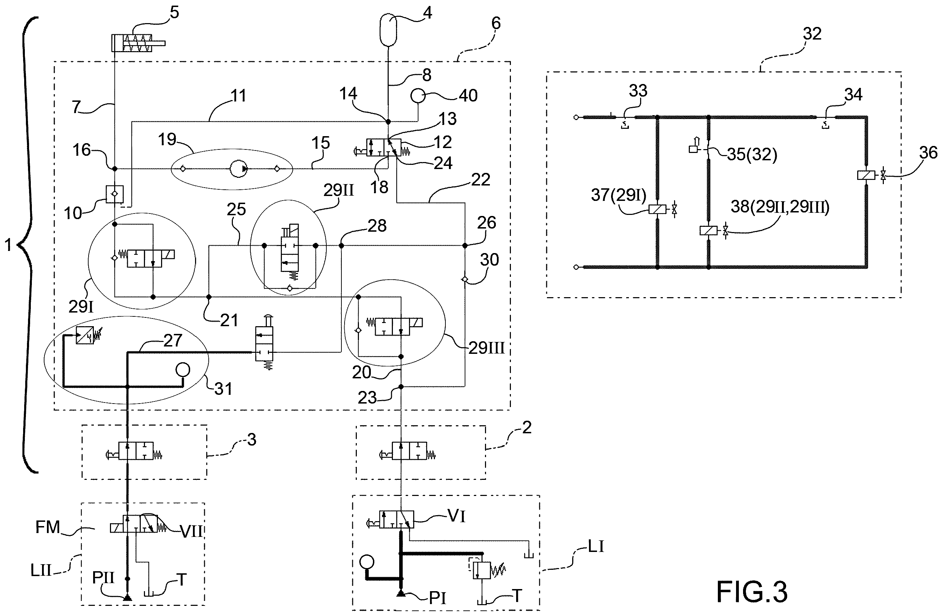

Figure 3 illustrates an intermediate step, wherein the handbrake (of a known type and not illustrated) has been released by an operator. The release of the handbrake causes the valve VII to switch over into the open position. In this position, the valve VII allows the passage of low-pressure oil, in general approximately between 20 and 30 bar, from the low-pressure oil inlet PII inside the low-pressure branch 27.

The oil pressure inside the low-pressure branch 27 trips, by means of the pressure switch 31, the status switch 35 causing the activation of the solenoid actuator 38 and, by means of the latter, the switching over of the flow control valves 2911 and 29III. In particular, the flow control valve 2911 is driven from the open position to the closed position, while the flow control valve 29III is moved from the closed position to the open position. Therefore, the flow control valve 2911 prevents the passage of oil along the intermediate branch 25, while the flow control valve 29III allows the passage of oil along the high-pressure branch 20.

In the operating condition illustrated in Figure 3, the towed vehicle is connected to the towing vehicle and can be moved, in other words the towed vehicle is not braked.

However, since the plant 1 has not yet been filled with high-pressure oil, the pressure switch 40 along the transfer branch 8 does not detect the presence of oil and the warning control light (of a known type and provided for by the Regulation) in the control cabin of the towing vehicle is switched on. The control light remains switched on until the plant 1 is pressurized and is intended to signal that the accumulator 4, i.e. the handbrake reservoir, of the towed vehicle is filled below the minimum threshold to be able to brake the towed vehicle.

In order to be able to switch off the control light, the operator must thus carry out a first braking operation, to be prolonged until the control light switches off. During this braking operation, the high-pressure oil from the main line LI loads both the accumulator 4 and the actuator 5.

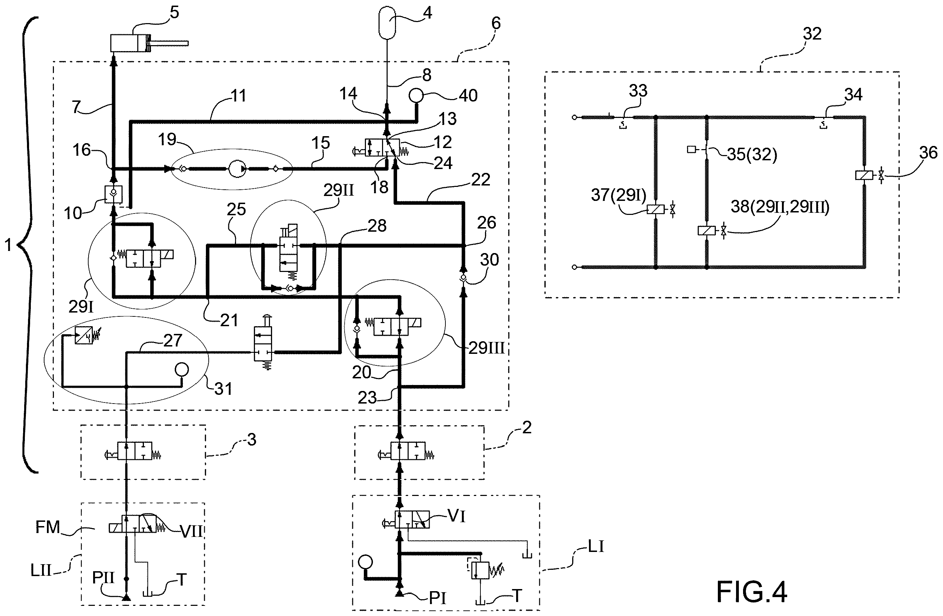

Figure 4 illustrates the plant 1 during the first braking step of the towed vehicle, wherein the oil pressure, in particular along the brake branch 7, the transfer branch 8 and the high-pressure branch 20, rises up to the high-pressure value provided for by the Regulation (it is predesigned to switch off the warning control light in the control cabin).

Once switched off the warning control light, the plant 1 has been correctly commissioned and it is thus possible to initiate a movement with the towed vehicle.

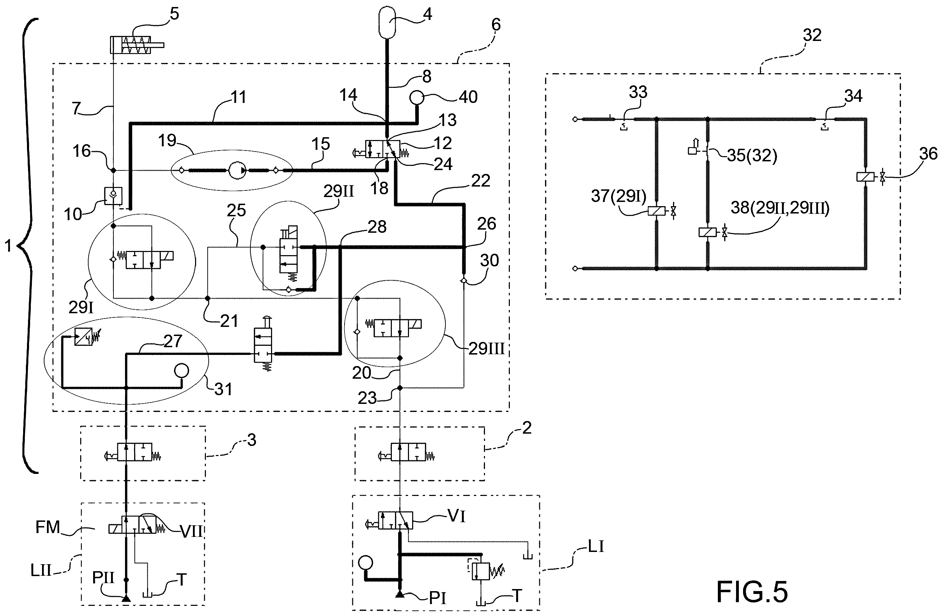

Figure 5 illustrates a brake releasing step of the towed vehicle, so as to be able to move the towed vehicle.

By releasing the service brake (normally a pedal), an operator causes the valve VI to switch over into the discharge position. In this case, therefore, the high-pressure branch 20 is put in communication with the discharge T of the towing vehicle, causing the high-pressure branch 20 and the brake branch 7 to be emptied. In this regard, it is noted that, advantageously, it is possible to empty the brake branch 7 despite the presence of the check valve 10, which is a non-return valve, since the check valve 10 is a valve piloted by the control branch 11. In other words, the check valve 10 is kept in the open position by the oil under pressure along the control branch 11. In particular, it is noted that the control branch 11 senses the pressure of the accumulator 4, which in the brake releasing step is filled with high-pressure oil and isolated from the discharge T, from the slide valve 12, from the hand pump 19, from the flow control valve 2911 and from the non-return valve 30. Advantageously, the pressure of the branch 8 can be managed electrically, electro-hydraulically, pneumatically and in other known manners in order to actuate the piloting of the non-return valve 10 (in turn, electric, mechanical, hydraulic, pneumatic or in other known variants).

This way, advantageously, despite the load loss in the high-pressure branch 20, it is possible to allow the emptying of the actuator 5.

In the case it is necessary to brake the trailer, reference must be made to the operating configuration illustrated in Figure 4 and described in the foregoing.

Further operating conditions of the plant 1 are described hereafter.

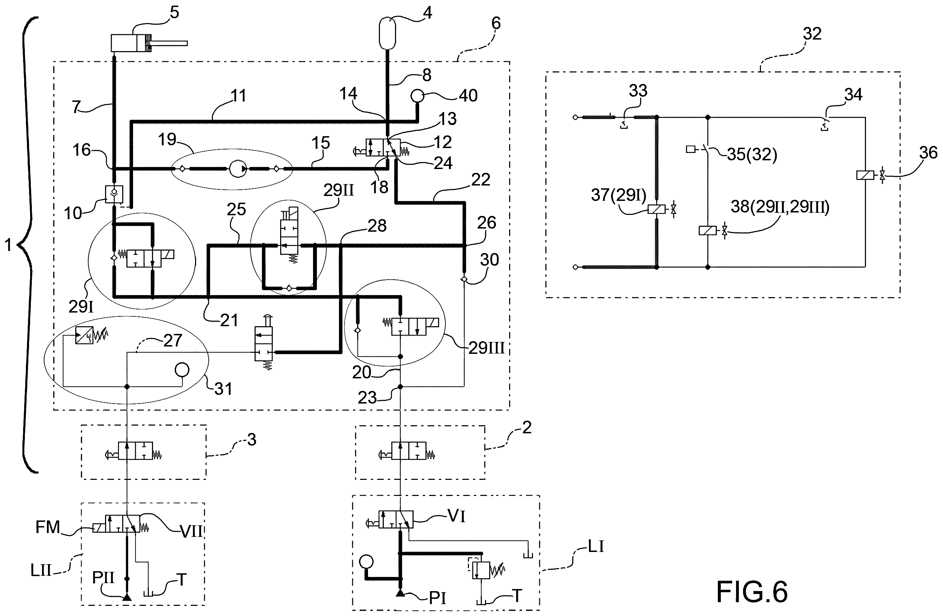

Figure 6 illustrates the case of actuating the handbrake, when the towed vehicle is connected to the towing vehicle.

In the case the handbrake is actuated by the operator, the valve VII switches over connecting the low-pressure branch 27 to the discharge T. In this condition, the pressure switch 31 no longer detecting the oil pressure in the low-pressure branch 27 causes the opening of the secondary switch 34 of the electric circuit 32.

This way, the pressure switch 31 controls the cut of the supply to the solenoid actuator 38 and, consequently, causes the switching over of the flow control valves 2911 and 29III. In other words, by actuating the handbrake, the flow control valves 2911 and 29III switch over. As illustrated in Figure 6, the flow control valve 2911 is driven into the open position and the flow control valve 29III is driven into the closed position.

In the configuration illustrated in Figure 6, the oil under pressure present in the accumulator 4 is sent to the actuator 5 so as to obtain the actuation of the brakes of the towed vehicle.

In particular, the oil under pressure in the accumulator 4 is sent to the actuator 5 through the transfer branch-off 22, the intermediate branch 25 and the brake branch 7.

It is further noted that the entire flow of oil under pressure is directed towards the actuator 5 for braking the towed vehicle, oil backflows towards the towing vehicle and, in particular, towards the discharge T are entirely prevented.

Advantageously, the operating condition illustrated in Figure 6 is obtained also:
- in the case of leaks along the secondary line LII or along the low-pressure branch 27; and/or
- in the case of loss of the electric signal.

Therefore, the plant 1 of the type described above ensures self-diagnosed safety measures in the case of malfunctions or of ruptures/leaks both along the hydraulic circuit 6 and along the secondary line LII of the towing vehicle.

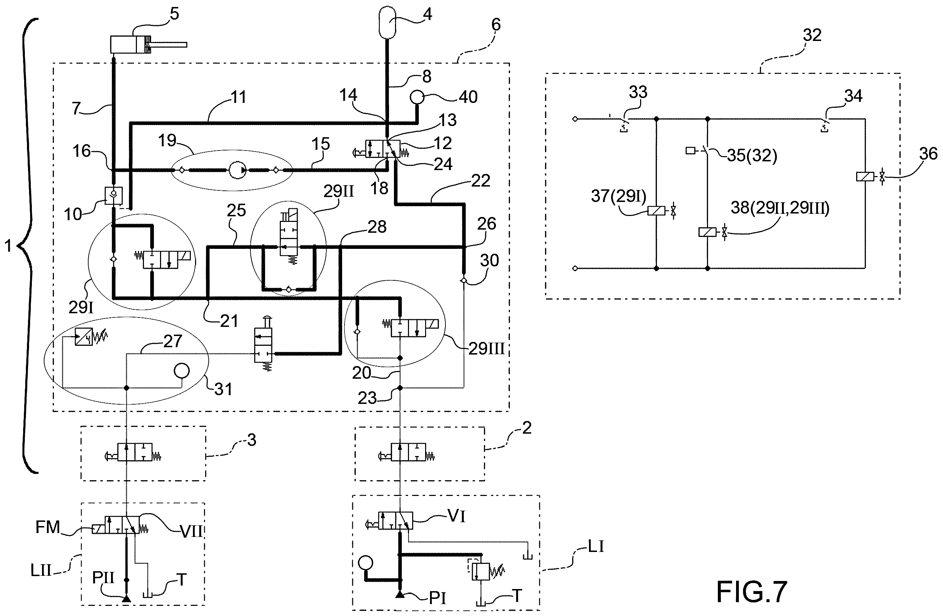

Figure 7 illustrates the plant 1 in the case where the towed vehicle is electrically disconnected from the towing vehicle.

Therefore, this is the condition which should normally occur in a static situation with a braked towed vehicle.

In the absence of the electric signal along the electric circuit 32, the flow control valves 2911 and 29III are in their rest position. In particular, the flow control valve 2911 is in the open position, allowing the oil of the accumulator to flow towards the actuator; while the flow control valve 29III is closed preventing the oil under pressure from being directed towards the main line LI of the towing vehicle and, potentially, with the discharge. In addition, it is noted that also the flow control valve 291 is in its rest position closing the brake branch 7. This way, thanks to the presence of the flow control valve 291 and of the flow control valve 29III, it possible to obtain a double seal to prevent the leakage of oil at the output /emptying of the actuator 5.

Therefore, the plant 1 of the type described above has the advantage of providing a double-seal system (realized by the flow control valves 291 and 29III), thus ensuring greater safety and preventing the possibility of an unintended emptying of the actuator 5, for example during long parking stops of the towed vehicle (which instead is something that occurs with the braking plants of a known type).

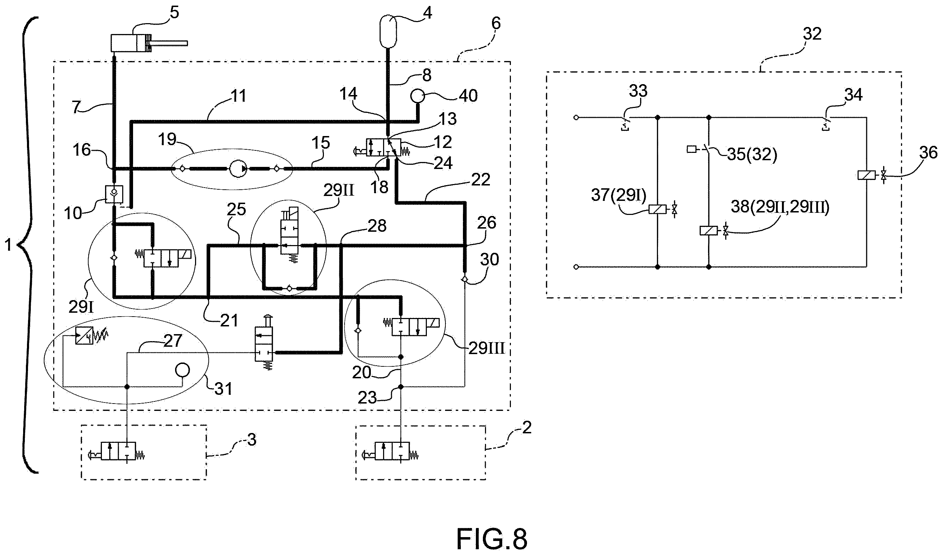

Figure 8 illustrates, instead, the condition of the trailer completely detached from the towing vehicle and in normal parking conditions.

According to what illustrated in Figure 8, the braking is ensured by means of the pressure of the oil of the accumulator which is taken to the actuator 5. The correct parking of the towed vehicle is ensured by the presence of the piloted check valve 10, which allows the passage of oil from the accumulator 4 to the actuator 5. Moreover, the presence of the flow control valve 291 and of the flow control valve 29III prevents potential unintended oil leakages.

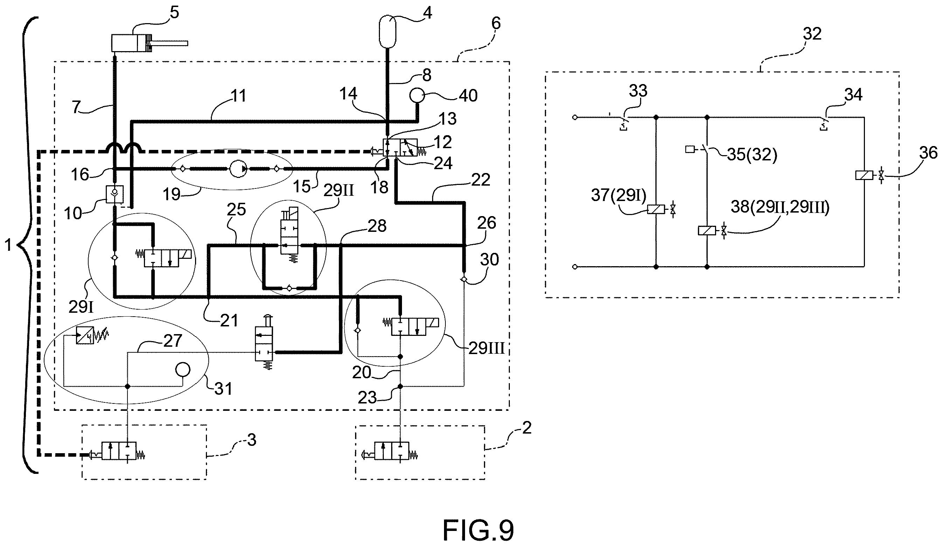

Figure 9 illustrates the operating configuration of the towed vehicle during a manual emergency manoeuvre operation of the trailer.

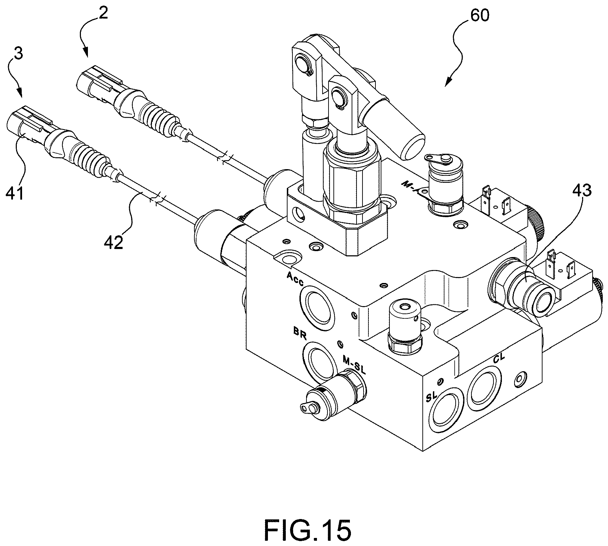

In the operating configuration illustrated in Figure 9, the low-pressure joint 3 has been connected to the directional control valve 12. It is commonly said that the low-pressure joint 3 has been short-circuited to the directional control valve 12. In this regard, it is noted that the low-pressure joint 3 is generally a female joint 41 placed at the end of a hose 42, which constitutes part of the low-pressure branch 27 (Figures 15 and 16). The directional control valve 12 in turn comprises a male joint 43 which is configured to couple with the female joint 41 and to actuate the directional control valve 12.

When the low-pressure joint 3 is connected to the male joint 43, the directional control valve 12 is in the operating position illustrated in Figure 9, wherein the transfer branch 8 is connected to the emergency branch 15. In this operating configuration, it is thus possible to move the oil from the actuator 5 to the accumulator 4 by means of the hand pump 19.

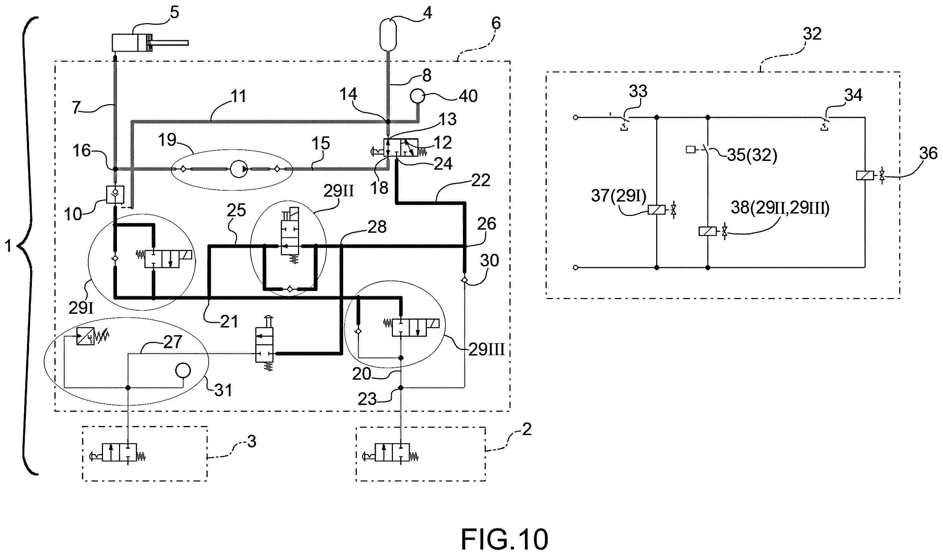

Figure 10 illustrates the plant 1 during an emptying step of the actuator 5 by means of the hand pump 19.

Once emptied the actuator 5, the brakes of the towed vehicle are disengaged and it is possible to move it manually.

Once manually moved the towed vehicle, it is possible to reapply the brakes. To do so, it is sufficient to disconnect the low-pressure joint 3 from the directional control valve 12.

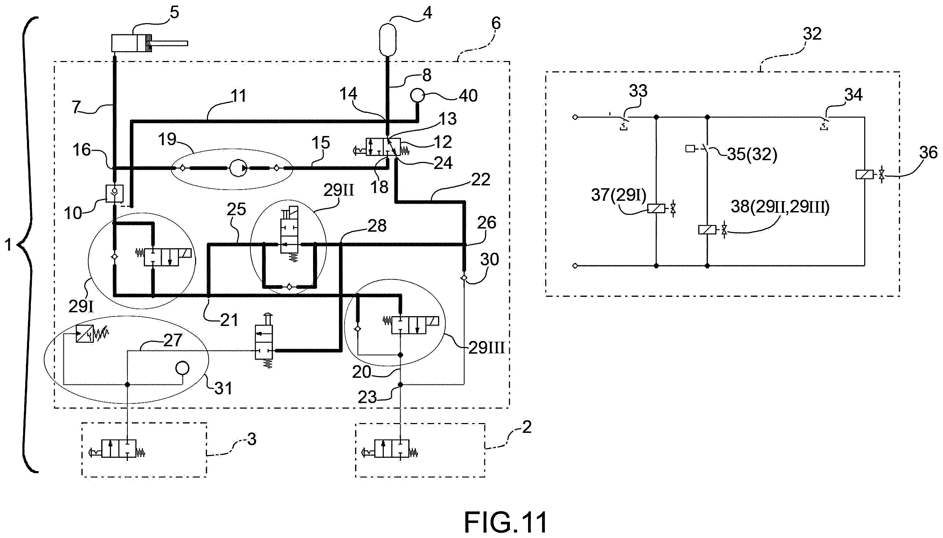

Figure 11 depicts the situation wherein the directional control valve 12 has been brought back into the rest position and the plant 1 is braked by the oil under pressure of the accumulator 4.

Advantageously, the accumulator can comprise a plurality of storage units, in other words, the accumulator 4 described in the foregoing can actually be the combination of two or more separate accumulators which receive the oil from the transfer branch 8. The presence of two separate accumulators, one loadable at the pressure of the main line LI (approximately 150 bar) and one at a higher pressure (approximately 180 bar), is advantageous since they ensure the volume necessary for the manual movement of the oil from the actuator 5 to the accumulators 4.

Therefore, advantageously, the plant 1 provides for the connection of the transfer branch 8 to a plurality of accumulators 4. Advantageously, the number of accumulators 4 installed on the plant 1 can be decided at the time of the installation, depending on the requirements of the towed vehicle on which the plant 1 is installed.

Moreover, the presence of two accumulators can allow the unblocking of the brakes, i.e. the movement of the oil from the actuator 5 to the accumulators 4 also in particular working conditions, such as for example hill starts with the handbrake pulled, which represent exceptional, yet recurring conditions of use of the towed vehicles.

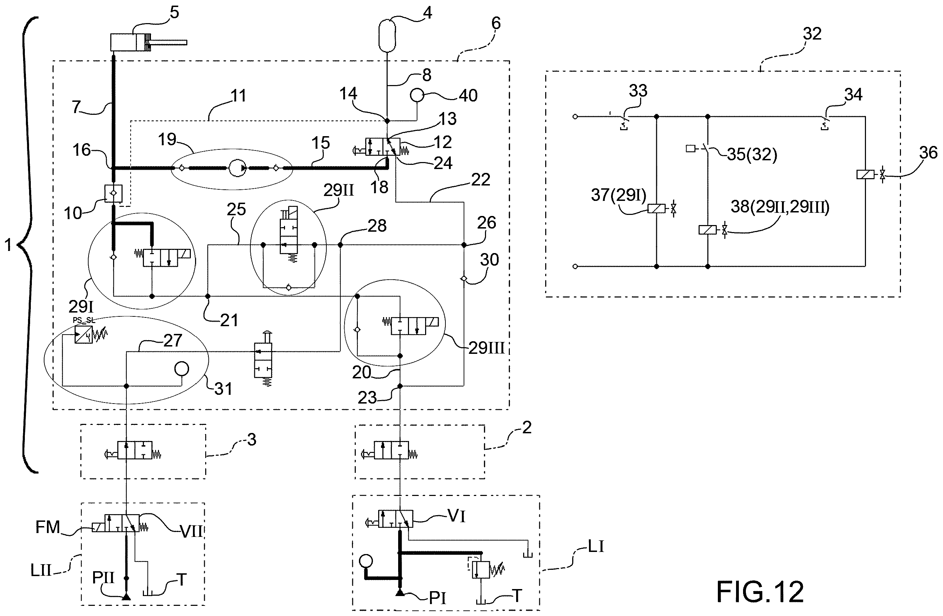

Figure 12 illustrates a further operating configuration, wherein the towed vehicle is connected to the towing vehicle and the accumulator 4 is connected to a discharge T so as to allow the emptying of the accumulator 4, while the actuator 5 is supplied with high-pressure oil, thus ensuring the braking of the towed vehicle. Such operation can be necessary, for example, in order to be able to carry out maintenance work on or replacements of the accumulator 4.

According to what illustrated in Figure 12, the mechanical valve 39 has been switched over by the direct action of the operator (according to the illustrated example, the mechanical valve 39 is a mushroom valve and the operator has pressed the cap), the action of the operator thus causes the switching over of the mechanical valve 39 which is driven into the open position, wherein the oil under pressure can flow through the intermediate branch 25, the low-pressure branch 27 and through the low-pressure joint 3 towards the discharge T of the secondary line LII.

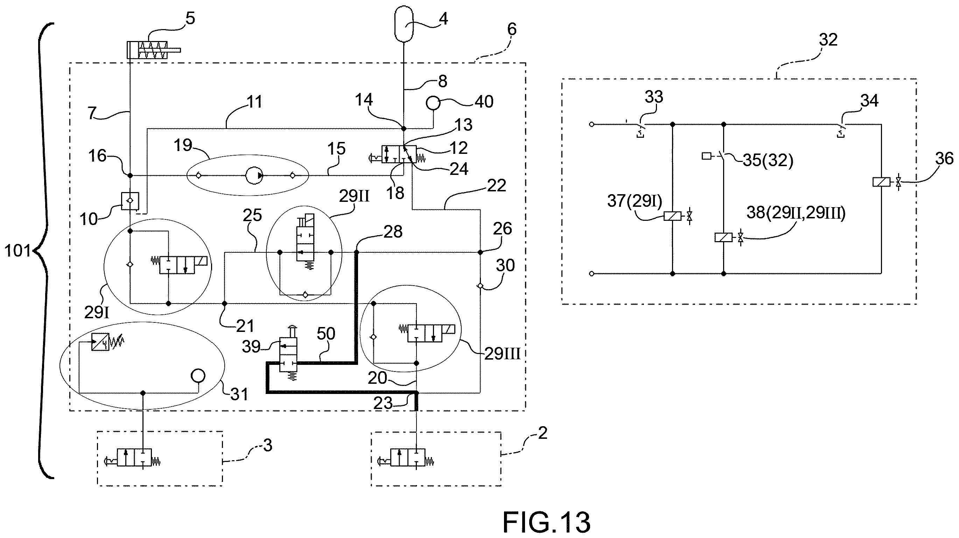

In Figure 13, reference numeral 101 indicates a variant of the plant of the type described above. The components in common with the plant 1 maintain the same reference numerals and are considered comprised therein without mentioning them again for the sake of brevity.

Unlike the plant 1, the plant 101 does not have the low-pressure branch 27 connected directly to the intermediate branch 25.

In particular, the hydraulic circuit 6 of the plant 101 comprises a discharge branch 50 which connects the joining node 28 to the high-pressure branch 20. The mechanical valve 39 is installed along the discharge branch 50. The plant 101 operates in an entirely analogous manner to the plant 1 of the type described above. Unlike the plant 1, when the mechanical valve 39 is in the open position, the oil under pressure can flow through the intermediate branch 25, the low-pressure branch 27 and through the high-pressure joint 2 towards the discharge T of the main line LI.

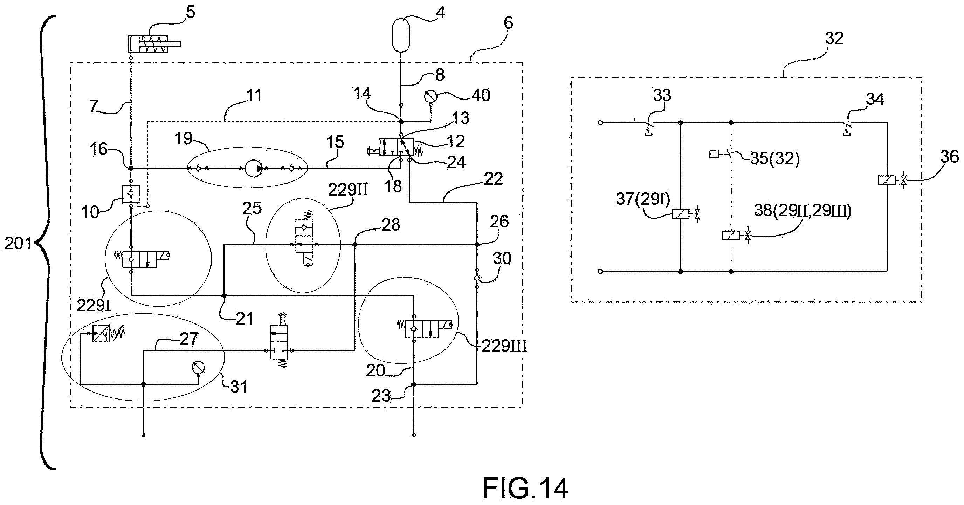

In Figure 14, reference numeral 201 illustrates a further variant of the plant according to the present invention. In Figure 14, the components in common with the plant 1 maintain the same reference numerals and are considered comprised therein without mentioning them again for the sake of brevity.

According to what illustrated in Figure 14, the hydraulic circuit 6 of the plant 201 in place of the flow control valves 291, 2911 and 29III the plant 201 comprises flow control valves with the check valve integrated as indicated in the figures by 2291, 229II and 229III. The functioning of the plant 201 is analogous to the functioning of the plant 1 and is not repeated for the sake of brevity.

According to a variant not illustrated, the plant according to the present invention can comprise one or two flow control valves 29 such as the type illustrated in Figures 1 to 13 and the remaining flow control valves of the type with integrated check valve, as illustrated in Figure 14.

Figure 15 illustrates as a whole a distributor 60 according to the present invention. The distributor 60 comprises a mechanical body within which the branches are obtained and the valve bodies of the hydraulic circuit 6 of the type described above are housed.

The distributor 60 is configured to be able to connect, in use, to an external manual pump of commercial type and is illustrated schematically in the figure. The distributor 60 is configured to be coupled, in use, with one or more accumulators 4 of commercial type.

Advantageously, based on the above statements, it follows that a plant 1, 101, 201 as described in the above examples ensures a maximum sealing of the oil under pressure at the output of the actuator 5, in particular thanks to the presence of two sealing means between the actuator 5 and a discharge T (such as, for example, the flow control valves 291 and 29III).

Moreover, advantageously, the presence of the piloted check valve 10 allows keeping the actuator 5 loaded under the action of the oil under pressure coming from the accumulator in conditions of prolonged parking.

Therefore, the plant 1, 101, 201 of the type described above ensures the maximum sealing of the oil under pressure inside the actuator 5, also in conditions of prolonged parking. Therefore, the plant 1, 101, 201 of the type described above ensures the maximum operating reliability and safety.

Moreover, the plant 1, 101, 201 of the type described above allows carrying out operations such as the manual moving and the emptying of the accumulator in safe conditions.

Moreover, the plant 1, 101, 201 allows being able to safely carry out the emptying of the accumulator and, potentially, the replacement of the accumulator 4 keeping the towed vehicle braked (i.e. keeping the brake branch 7 filled with high-pressure oil) and without it being necessary to disconnect the towed vehicle from the towing vehicle.

Therefore, potential maintenance/replacement operations of the accumulator 4 take place advantageously with the towed vehicle braked.

## Claims

1. A braking method to brake a towed vehicle by means of a plant (1; 101; 201) configured to be hydraulically connected, in use, to a towing vehicle, in particular an agricultural or forestry machine, which complies with EU Regulation 167/2013, namely which comprises, in turn, a main high-pressure oil line (LI), a secondary low-pressure oil line (LII) and a discharge (T); the plant (1; 101; 201) comprising a hydraulic actuator (5) configured to operate a braking system and an accumulator (4) configured to store oil at a predetermined pressure; the plant (1; 101; 201) further comprising a hydraulic circuit (6) configured to be hydraulically connected, in use, to the actuator (5), to the accumulator (4), to the main high-pressure oil line (LI) and to the secondary low-pressure oil line (LII); wherein said hydraulic circuit (6) comprises a brake branch (7), which is configured to receive high-pressure oil from said main high-pressure oil line (LI) or from said accumulator (4);
**characterised in that**
the hydraulic circuit (6) comprises a pilot operated check valve (10) arranged along said brake branch (7); the braking method involving closing the connection between said actuator (5) and said discharge (T) by means of said pilot operated check valve (10).

2. A method according to Claim 1, wherein the hydraulic circuit (6) further comprises two flow control valves (29I, 2911; 2291, 229II) arranged in series to one another and interposed between said check valve (10) and said discharge (T); the braking method involving closing the connection between said actuator (5) and the discharge (T) through both the pilot operated check valve (10) and each one of the flow control valves (29I, 2911; 2291, 229II).

3. A method according to any one of the preceding claims, wherein the check valve (10) is piloted by the oil under pressure in the accumulator (4).

4. A method according to any one of the preceding claims and comprising the step of emptying the accumulator (4) keeping said brake branch (7) filled with oil under pressure.

5. A hydraulic circuit for a braking plant (1; 101; 201) configured to be hydraulically connected, in use, to a towing vehicle comprising, in turn, a main high-pressure oil line (LI), a secondary low-pressure oil line (LII) and a discharge (T); the hydraulic circuit (6) being configured to be hydraulically connected, in use, to an actuator (5), to an accumulator (4), to said main high-pressure oil line (LI) and to said secondary low-pressure oil line (LII); wherein said hydraulic circuit (6) comprises a brake branch (7), which is configured to receive high-pressure oil from said main high-pressure oil line (LI) or from said accumulator (4); **characterised in that**
the hydraulic circuit (6) comprises a pilot operated check valve (10) arranged along said brake branch (7) .

6. A hydraulic circuit according to Claim 5 and comprising two flow control valves (29I, 2911; 2291, 229II) arranged in series to one another and interposed between said check valve (10) and said discharge (T).

7. A hydraulic circuit according to Claim 5 or 6 and further comprising:
- a transfer branch (8) connected, in use, to the accumulator (4); and
- a control branch (11), which connects the check valve (10) to the transfer branch (8).

8. A hydraulic circuit according to any one of the claims from 5 to 7 and comprising a directional control valve (12); wherein the transfer branch (8) is interposed between the accumulator (4) and the directional control valve (12); wherein the directional control valve (12) is configured to selectively connect said transfer branch (8) to an emergency branch (15), along which there is arranged a pump (19), which is configured to transfer oil from the actuator (5) towards the accumulator (4); or a transfer branch-off (22), which is connected, in use, to the main high-pressure oil line (LI) and along which a non-return valve (30) is disposed.

9. A hydraulic circuit according to claim 8 and comprising:
- a high-pressure branch (20), which is connected, at an end, to a high-pressure joint (2) and, at the other end, to a first joining node (21) joining it to the brake branch (7);
- said transfer branch-off (22), which is connected, at an end, to a branch-off node (23) of the high-pressure branch (20) and, at the other end, to an opening (24) of a respective way of the directional control valve (12);
- an intermediate branch (25) connected, at an end, to a second joining node (26) joining it to the transfer branch-off (22) and, at the other end, to the first joining node (21) joining it to the brake branch (7);
- a low-pressure branch (27), which is connected, at an end, to a low-pressure joint (3) and, at the other end, to a third joining node (28) joining it to the intermediate branch (25).

10. A hydraulic circuit according to Claim 9 and comprising:
- a first flow control valve (291; 2291) arranged along the brake branch (7) between the check valve (10) and the first joining node (21), wherein, in the rest position, the first flow control valve (291; 2291) is closed, namely interrupts the passage of oil along the brake branch (7);
- a second flow control valve (2911; 229II) arranged along the intermediate branch (25) and interposed between the first joining node (21) and the second joining node (28), wherein, in the rest position, the second flow control valve (2911; 229II) is open, namely allows for the passage of oil along the intermediate branch (25);
- a third flow control valve (29III; 229III) arranged along the high-pressure branch (20) and interposed between the branch-off node (23) and the first joining node (21) joining it to the brake branch (7); in the rest position, the third flow control valve (29III; 229III) is closed, namely interrupts the passage of oil along the high-pressure branch (20).

11. A hydraulic circuit according to Claim 9 or 10 and comprising a pressure switch (31), which is connected to the low-pressure branch (27) and is configured to electrically operate one or more flow control valves (29II, 29III; 229II, 229III), depending on the value of the oil pressure along the low-pressure branch (27).

12. A hydraulic circuit according to one of the claims from 9 to 11 and further comprising a manually operated mechanical valve (39), which is configured to selectively establish a communication between said transfer branch-off (22) and the discharge (T).

13. A hydraulic distributor comprising a body, in particular a metal body, where a hydraulic circuit (6) according to one of the claims from 5 to 12 is obtained.

14. A hydraulic plant comprising a hydraulic circuit (6) according to one of the claims from 5 to 12, an actuator (5) connected to the brake branch (7) of said hydraulic circuit (6) and one or more accumulators (4), each connected to the transfer branch (22) of said hydraulic circuit (6).

15. A plant according to Claim 14 and comprising an electric circuit (32), which is configured to be connected, in use, to a current line of the towing vehicle; said electric circuit (32) being configured to operate one or more flow control valves (29I, 2911, 29III; 2291, 229II, 229III) of said hydraulic circuit (6), depending on the specific operating condition.

## Patentansprüche

1. Bremsverfahren zum Abbremsen eines Anhängefahrzeugs mittels einer Anlage (1; 101; 201), welche so konfiguriert ist, dass sie im Betrieb hydraulisch mit einem Zugfahrzeug, insbesondere einer land- oder forstwirtschaftlichen Maschine, verbunden ist, welche der EU-Verordnung 167/2013 entspricht, und die ihrerseits eine Haupthochdruckölleitung (LI), eine sekundäre Niederdruckölleitung (LII) und einen Auslass (T) umfasst; wobei die Anlage (1; 101; 201) einen hydraulischen Aktuator (5), welcher so konfiguriert ist, dass er ein Bremssystem betätigt, und einen Akkumulator (4), welcher so konfiguriert ist, dass er Öl mit einem vorbestimmten Druck speichert, umfasst; wobei die Anlage (1; 101; 201) ferner einen Hydraulikkreislauf (6), welcher so konfiguriert ist, dass er im Betrieb hydraulisch mit dem Aktuator (5), dem Akkumulator (4), der Haupthochdruckölleitung (LI) und der sekundären Niederdruckölleitung (LII) verbunden ist, umfasst; wobei der Hydraulikkreislauf (6) einen Bremszweig (7), welcher so konfiguriert ist, dass er Hochdrucköl von der Haupthochdruckölleitung (LI) oder von dem Akkumulator (4) empfängt, umfasst;
**dadurch gekennzeichnet, dass**
der Hydraulikkreislauf (6) ein vorgesteuertes Rückschlagventil (10), welches entlang des Bremszweigs (7) angeordnet ist, umfasst; wobei das Bremsverfahren das Schließen der Verbindung zwischen dem Aktuator (5) und dem Auslass (T) mit Hilfe des vorgesteuerten Rückschlagventils (10) umfasst.

2. Verfahren nach Anspruch 1, wobei der Hydraulikkreislauf (6) ferner zwei Stromregelventile (29I, 29II; 229I, 229II), welche in Reihe zueinander angeordnet und zwischen dem Rückschlagventil (10) und dem Auslass (T) eingefügt sind, umfasst; wobei das Bremsverfahren das Schließen der Verbindung zwischen dem Aktuator (5) und dem Auslass (T) durch sowohl das vorgesteuerte Rückschlagventil (10) als auch jedes der Stromregelventile (29I, 29II; 229I, 229II) umfasst.

3. Verfahren nach einem der vorhergehenden Ansprüche, wobei das Rückschlagventil (10) durch das im Akkumulator (4) unter Druck befindliche Öl gesteuert wird.

4. Verfahren nach einem der vorhergehenden Ansprüche und umfassend den Schritt des Entleerens des Akkumulators (4), wobei der Bremszweig (7) mit Öl unter Druck gefüllt bleibt.

5. Hydraulikkreislauf für eine Bremsanlage (1; 101; 201), welcher so konfiguriert ist, dass er im Betrieb hydraulisch mit einem Zugfahrzeug verbunden ist, welches seinerseits eine Haupthochdruckölleitung (LI), eine sekundäre Niederdruckölleitung (LII) und einen Auslass (T) umfasst; wobei der Hydraulikkreislauf (6) so konfiguriert ist, dass er im Betrieb hydraulisch mit einem Aktuator (5), einem Akkumulator (4), der Haupthochdruckölleitung (LI) und der sekundären Niederdruckölleitung (LII) verbunden ist; wobei der Hydraulikkreislauf (6) einen Bremszweig (7), welcher so konfiguriert ist, dass er Hochdrucköl von der Haupthochdruckölleitung (LI) oder von dem Akkumulator (4) empfängt, umfasst; **dadurch gekennzeichnet, dass** der Hydraulikkreislauf (6) ein vorgesteuertes Rückschlagventil (10), welches entlang des Bremszweigs (7) angeordnet ist, umfasst.

6. Hydraulikkreislauf nach Anspruch 5, welcher zwei Stromregelventile (29I, 29II; 229I, 229II), welche in Reihe zueinander angeordnet und zwischen dem Rückschlagventil (10) und dem Auslass (T) eingefügt sind, umfasst.

7. Hydraulikkreislauf nach Anspruch 5 oder 6, ferner umfassend:
- einen Transferzweig (8), welcher im Betrieb mit dem Akkumulator (4) verbunden ist; und
- einen Steuerzweig (11), welcher das Rückschlagventil (10) mit dem Transferzweig (8) verbindet.

8. Hydraulikkreislauf nach einem der Ansprüche 5 bis 7, welcher ein Wegeventil (12) umfasst; wobei der Transferzweig (8) zwischen dem Akkumulator (4) und dem Wegeventil (12) angeordnet ist; wobei das Wegeventil (12) so konfiguriert ist, dass es den Transferzweig (8) selektiv mit einem Notfallzweig (15) verbindet, entlang welchem eine Pumpe (19) angeordnet ist, welche so konfiguriert ist, dass sie Öl von dem Aktuator (5) zu dem Akkumulator (4) transferiert; oder mit einer Transfer-Abzweigung (22), welche im Betrieb mit der Haupthochdruckölleitung (LI) verbunden ist und entlang welcher ein Rückschlagventil (30) angeordnet ist.

9. Hydraulikkreislauf nach Anspruch 8, umfassend:
- einen Hochdruckzweig (20), welcher an einem Ende mit einer Hochdruckverbindung (2) und am anderen Ende mit einem ersten Verbindungsknoten (21) verbunden ist, welcher ihn mit dem Bremszweig (7) verbindet;
- die Transfer-Abzweigung (22), welche an einem Ende mit einem Abzweigknoten (23) des Hochdruckzweigs (20) und am anderen Ende mit einer Öffnung (24) eines entsprechenden Weges des Wegeventils (12) verbunden ist;
- einen Zwischenzweig (25), welcher an einem Ende mit einem zweiten Verbindungsknoten (26) verbunden ist, welcher ihn mit der Transfer-Abzweigung (22) verbindet, und am anderen Ende mit dem ersten Verbindungsknoten (21), welcher ihn mit dem Bremszweig (7) verbindet;
- einen Niederdruckzweig (27), welcher an einem Ende mit einer Niederdruckverbindung (3) und am anderen Ende mit einem dritten Verbindungsknoten (28) verbunden ist, welcher ihn mit dem Zwischenzweig (25) verbindet.

10. Hydraulikkreislauf nach Anspruch 9, umfassend:
- ein erstes Stromregelventil (29I; 229I), welches entlang des Bremszweigs (7) zwischen dem Rückschlagventil (10) und dem ersten Verbindungsknoten (21) angeordnet ist, wobei das erste Stromregelventil (29I; 229I) in der Ruhestellung geschlossen ist, d.h. den Durchfluss von Öl entlang des Bremszweigs (7) unterbricht;
- ein zweites Stromregelventil (29II; 229II), welches entlang des Zwischenzweigs (25) angeordnet und zwischen dem ersten Verbindungsknoten (21) und dem zweiten Verbindungsknoten (28) eingefügt ist, wobei das zweite Stromregelventil (29II; 229II) in der Ruhestellung offen ist, d.h. den Durchfluss von Öl entlang des Zwischenzweigs (25) ermöglicht;
- ein drittes Stromregelventil (29III; 229III), welches entlang des Hochdruckzweigs (20) angeordnet und zwischen dem Abzweigknoten (23) und dem ersten Verbindungsknoten (21), welcher ihn mit dem Bremszweig (7) verbindet, eingefügt ist; in der Ruhestellung ist das dritte Stromregelventil (29III; 229III) geschlossen, d.h. es unterbricht den Durchfluss von Öl entlang des Hochdruckzweigs (20).

11. Hydraulikkreislauf nach Anspruch 9 oder 10, welcher einen Druckschalter (31), welcher mit dem Niederdruckzweig (27) verbunden und so konfiguriert ist, dass er ein oder mehrere Stromregelventile (29II, 29III; 229II, 229III) in Abhängigkeit vom Wert des Öldrucks entlang des Niederdruckzweigs (27) elektrisch betätigt, umfasst.

12. Hydraulikkreislauf nach einem der Ansprüche 9 bis 11, welcher ferner ein manuell betätigtes mechanisches Ventil (39), welches so konfiguriert ist, dass es selektiv eine Verbindung zwischen der Transfer-Abzweigung (22) und dem Auslass (T) herstellt, umfasst.

13. Hydraulischer Verteiler mit einem Körper, insbesondere einem Metallkörper, in welchem eine Hydraulikkreislauf (6) nach einem der Ansprüche 5 bis 12 hergestellt wird.

14. Hydraulikanlage mit einem Hydraulikkreislauf (6) nach einem der Ansprüche 5 bis 12, einem an den Bremszweig (7) des Hydraulikkreislaufs (6) angeschlossenen Aktuator (5) und einem oder mehreren Ackumulatoren (4), welche jeweils an den Transferzweig (22) des Hydraulikkreislaufs (6) angeschlossen sind.

15. Anlage nach Anspruch 14, welche eine elektrische Schaltung (32) umfasst, welche so konfiguriert ist, dass sie im Betrieb an eine Stromleitung des Zugfahrzeugs angeschlossen wird; wobei die elektrische Schaltung (32) so konfiguriert ist, dass sie ein oder mehrere Stromregelventile (29I, 29II, 29III; 229I, 229II, 229III) des Hydraulikkreislaufs (6) in Abhängigkeit von den spezifischen Betriebsbedingungen betätigt.

## Revendications

1. Méthode de freinage pour freiner un véhicule remorqué au moyen d'une unité (1 ; 101 ; 201) configurée pour être reliée hydrauliquement, lors de son utilisation, à un véhicule de remorquage, en particulier une machine agricole ou forestière, qui est conforme au règlement UE 167/2013, à savoir qui comprend, les uns après les autres, une canalisation d'huile haute pression principale (LI), une canalisation d'huile basse pression secondaire (LII) et un refoulement (T) ; l'unité (1; 101; 201) comprenant un actionneur hydraulique (5) configuré pour faire fonctionner un système de freinage et un accumulateur (4) configuré pour stocker de l'huile à une pression prédéterminée ; l'unité (1 ; 101 ; 201) comprenant en outre un circuit hydraulique (6) configuré pour être relié hydrauliquement, lors de son utilisation, à l'actionneur (5), à l'accumulateur (4), à la canalisation d'huile haute pression principale (LI) et à la canalisation d'huile basse pression secondaire (LII) ; dans laquelle ledit circuit hydraulique (6) comprend une dérivation de frein (7), qui est configurée pour recevoir de l'huile haute pression à partir de ladite canalisation d'huile haute pression principale (LI) ou à partir dudit accumulateur (4) ;
**caractérisée en ce que**
le circuit hydraulique (6) comprend une soupape antiretour (10) pilotée agencée le long de ladite dérivation de frein (7) ; la méthode de freinage impliquant la fermeture de la liaison entre ledit actionneur (5) et ledit refoulement (T) au moyen de ladite soupape antiretour (10) pilotée.

2. Méthode selon la revendication 1, dans laquelle le circuit hydraulique (6) comprend en outre deux soupapes de régulation de débit (29I, 29II ; 229I, 229II) agencées en série l'une par rapport à l'autre et interposées entre ladite soupape antiretour (10) et ledit refoulement (T); la méthode de freinage impliquant la fermeture de la liaison entre ledit actionneur (5) et le refoulement (T) par le biais à la fois de la soupape antiretour (10) pilotée et de chacune des soupapes de régulation de débit (29I, 29II ; 229I, 22911) .

3. Méthode selon l'une quelconque des revendications précédentes, dans laquelle la soupape antiretour (10) est pilotée par l'huile sous pression dans l'accumulateur (4).

4. Méthode selon l'une quelconque des revendications précédentes et comprenant l'étape consistant à vider l'accumulateur (4) gardant ladite dérivation de frein (7) remplie d'huile sous pression.

5. Circuit hydraulique pour une unité (1 ; 101 ; 201) de freinage configuré pour être relié hydrauliquement, lors de son utilisation, à un véhicule de remorquage comprenant, les uns après les autres, une canalisation d'huile haute pression principale (LI), une canalisation d'huile basse pression secondaire (LII) et un refoulement (T) ; le circuit hydraulique (6) étant configuré pour être relié hydrauliquement, lors de son utilisation, à un actionneur (5), à un accumulateur (4), à ladite canalisation d'huile haute pression principale (LI) et à ladite canalisation d'huile basse pression secondaire (LII) ; dans lequel ledit circuit hydraulique (6) comprend une dérivation de frein (7), qui est configurée pour recevoir de l'huile haute pression à partir de ladite canalisation d'huile haute pression principale (LI) ou à partir dudit accumulateur (4) ; **caractérisé en ce que**
le circuit hydraulique (6) comprend une soupape antiretour (10) pilotée agencée le long de ladite dérivation de frein (7).

6. Circuit hydraulique selon la revendication 5 et comprenant deux soupapes de régulation de débit (29I, 29II ; 229I, 229II) agencées en série l'une par rapport à l'autre et interposées entre ladite soupape antiretour (10) et ledit refoulement (T).

7. Circuit hydraulique selon la revendication 5 ou 6 et comprenant en outre :
- une dérivation de transfert (8), reliée, lors de son utilisation, à l'accumulateur (4) ; et
- une dérivation de commande (11), qui relie la soupape antiretour (10) à la dérivation de transfert (8).

8. Circuit hydraulique selon l'une quelconque des revendications 5 à 7 et comprenant une soupape de commande directionnelle (12) ; dans lequel la dérivation de transfert (8) est interposée entre l'accumulateur (4) et la soupape de commande directionnelle (12) ; dans lequel la soupape de commande directionnelle (12) est configurée pour relier sélectivement ladite dérivation de transfert (8) à une dérivation d'urgence (15), le long de laquelle est agencée une pompe (19), qui est configurée pour transférer de l'huile à partir de l'actionneur (5) vers l'accumulateur (4); ou une bifurcation de transfert (22), qui est reliée, lors de son utilisation, à la canalisation d'huile haute pression principale (LI) et le long de laquelle une soupape de retenue (30) est disposée.

9. Circuit hydraulique selon la revendication 8 et comprenant :
- une dérivation haute pression (20), qui est reliée, à une extrémité, à un raccord haute pression (2) et, à l'autre extrémité, à un premier nœud de raccordement (21) la raccordant à la dérivation de frein (7) ;
- ladite bifurcation de transfert (22), qui est reliée, à une extrémité, à un nœud de bifurcation (23) de la dérivation haute pression (20) et, à l'autre extrémité, à une ouverture (24) d'une voie respective de la soupape de commande directionnelle (12) ;
- une dérivation intermédiaire (25) reliée, à une extrémité, à un deuxième nœud de raccordement (26) la raccordant à la bifurcation de transfert (22) et, à l'autre extrémité, au premier nœud de raccordement (21) la raccordant à la dérivation de frein (7) ;
- une dérivation basse pression (27), qui est reliée, à une extrémité, à un raccord basse pression (3) et, à l'autre extrémité, à un troisième nœud de raccordement (28) la raccordant à la dérivation intermédiaire (25).

10. Circuit hydraulique selon la revendication 9 et comprenant :
- une première soupape de régulation de débit (29I ; 229I) agencée le long de la dérivation de frein (7) entre la soupape antiretour (10) et le premier nœud de raccordement (21), dans lequel, dans la position de repos, la première soupape de régulation de débit (29I ; 2291) est fermée, à savoir interrompt le passage d'huile le long de la dérivation de frein (7) ;
- une deuxième soupape de régulation de débit (2911 ; 229II) agencée le long de la dérivation intermédiaire (25) et interposée entre le premier nœud de raccordement (21) et le deuxième nœud de raccordement (28), dans lequel, dans la position de repos, la deuxième soupape de régulation de débit (29II ; 229II) est ouverte, à savoir permet le passage d'huile le long de la dérivation intermédiaire (25) ;
- une troisième soupape de régulation de débit (29III ; 229III) agencée le long de la dérivation haute pression (20) et interposée entre le nœud de bifurcation (23) et le premier nœud de raccordement (21) la raccordant à la dérivation de frein (7) ; dans la position de repos, la troisième soupape de régulation de débit (29III ; 229III) est fermée, à savoir interrompt le passage d'huile le long de la dérivation haute pression (20).

11. Circuit hydraulique selon la revendication 9 ou 10 et comprenant un commutateur à pression (31), qui est relié à la dérivation basse pression (27) et est configuré pour faire fonctionner électriquement une ou plusieurs soupapes de régulation de débit (29II, 29III ; 229II, 229III), en fonction de la valeur de la pression d'huile le long de la dérivation basse pression (27).

12. Circuit hydraulique selon l'une des revendications 9 à 11 et comprenant en outre une soupape mécanique manœuvrée à la main (39), qui est configurée pour établir sélectivement une communication entre ladite bifurcation de transfert (22) et le refoulement (T) .

13. Distributeur hydraulique comprenant un corps, en particulier un corps métallique, où un circuit hydraulique (6) selon l'une des revendications 5 à 12 est obtenu.

14. Unité hydraulique comprenant un circuit hydraulique (6) selon l'une des revendications 5 à 12, un actionneur (5) relié à la dérivation de frein (7) dudit circuit hydraulique (6) et un ou plusieurs accumulateurs (4), chacun relié à la dérivation de transfert (22) dudit circuit hydraulique (6).

15. Unité selon la revendication 14 et comprenant un circuit électrique (32), qui est configuré pour être relié, lors de son utilisation, à une ligne de courant du véhicule de remorquage ; ledit circuit électrique (32) étant configuré pour faire fonctionner une ou plusieurs soupapes de régulation de débit (29I, 29II, 29III ; 229I ; 229II, 229III) dudit circuit hydraulique (6), en fonction de la condition de fonctionnement spécifique.
